# EUROPEAN PATENT APPLICATION

(11) **EP 1 656 996 A1**
(43) Date of publication of application: **17.05.2006**
(21) Application number: 04105791.0
(22) Date of filing: 16.11.2004
(51) Int. Cl.: B03D 1/22, D21B 1/12, D21B 1/32, D21F 1/70, B03D 1/16, B01F 5/00, B01F 7/16

(54) **Agitated flotation apparatus for cleaning fibrous suspensions dispersed in liquids.**

(30) Priority: 21.07.2004 IT VI20040181
(71) Applicant: COMER S.p.A., 36030 San Vito di Leguzzano (IT)
(72) Inventor: Dal Maso, Giancarlo, 36015, Schio (VI) (IT)
(74) Representative: Bonini, Ercole

(57) **Abstract**

A reactor (1; 30) for cleaning fibrous suspensions dispersed in liquids, comprising: a substantially cylindrical container (2); one or more rotating blades (3) arranged inside the container (2); a plurality of feed units (5, 6, 7, 8, 9) for feeding the suspension to be cleaned into the container (2) together with a gaseous substance dispersed therein in the form of bubbles; means (14; 16) for intercepting the suspension arranged inside the container (2); means (10) for skimming the foam and the cleaned suspension. Each feed unit (6, 7, 8, 9) comprises at least one feed pipe (6a, 7a, 8a, 9a) which extends into the container (2) and is provided with a plurality of ejectors (6d, 7d, 8d, 9d), each of which have a spray direction (Z) facing the inner surface (2a) of the container (2) for the distribution of the suspension to be cleaned starting from the inside of the cross section (S) of the container (2).

## Description

The invention concerns an improved reactor for cleaning fibrous suspensions dispersed in liquids.

In particular the reactor object of the invention has been designed to be employed in the paper manufacturing sector, where it is used to remove ink from fibrous suspensions deriving from recycled paper.

It is known that in the paper processing sector the cleaning of fibrous suspensions, and particularly the cleaning of and ink removal from fibrous suspensions obtained from recycled paper, is performed by flotation inside purposely designed reactors.

Essentially, said known flotation treatment consists in introducing into the reactor the fibrous suspension to be cleaned together with air and maintaining the fluid mass in agitation in order to favour contact between the air bubbles and the fibrous suspension.

The air bubbles pick up the impurities present in the suspension which they encounter during movement inside the reactor, creating foam which floats on the free surface of the suspension; said foam is continuously removed by means of appropriate skimming devices.

Reactors of the known type which clean fibrous suspensions deriving from recycled paper by means of the flotation method described above are illustrated in the patents WO 98/54402 and WO 98/54403, whose holder is the applicant for the present invention.

In both patents the reactor essentially consists of a cylindrical container provided with a series of injectors arranged around its circumference and at different heights.

The suspension to be cleaned is introduced into the container by pumping from the outside towards the inside via the injectors arranged at the level of the free surface of the suspension already present, each injector being also connected in parallel to an air suction pipe which communicates with the external environment.

During injection, the suspension sucks in air from the outside by Venturi effect, so that an emulsion is introduced into the container consisting of the suspension to be cleaned, in which air bubbles are dispersed.

The air bubbles, owing also to the presence of chemical reagents, pick up the impurities present in the suspension and generate foam which floats on the free surface of the suspension: it is this "picking up" of the impurities by the air bubbles which is called flotation.

The foam is removed from the free surface of the suspension by means of one or more rotating blades and then conveyed away via an outlet pipe.

The suspension which has undergone the first flotation inside the container drops by gravity towards the bottom of the container and enters the interception means, which in the patent WO 98/54403 are present only on the bottom, while in the patent WO 98/54402 they are also present in an intermediate position in the container; the suspension is pumped back into the container at different heights via further injectors connected in parallel to the same number of air suction pipes.

In this way the suspension, already partially cleaned during the first flotation, by dropping again towards the bottom of the container undergoes backwashing by the air bubbles which move upwards and absorb the impurities according to the process previously described.

In this way further flotation of the fibrous suspension is obtained.

The suspension drops towards the bottom of the container and when it enters the interception means arranged on the bottom for the second time, it has basically terminated its cleaning cycle and is conveyed away for use by means of pumps.

All the reactors of the known type described and also others equivalent to them have some recognised drawbacks and limitations.

A first drawback consists in the fact that introduction of the fibrous suspension to be cleaned is performed radially from the outside towards the inside of the container and this makes construction of the reactor complex and costly since it requires the installation, circumferentially and at various heights of the container, of a large number of injectors with related valves and air feed pipes.

A further drawback consists in the fact that the presence of such a large number of components also requires lengthy assembly work with consequent increase in costs, which influence the sale price and therefore the competitiveness of the company on the market.

A further drawback due to said large number of components is represented by the high maintenance costs which the purchaser has to sustain after installation to keep the reactor in efficient working order at all times.

A further drawback consists in the fact that said large number of component elements obliges the manufacturer to perform pre-assembly and subsequent disassembly of the reactor prior to shipment.

This obviously also contributes to increasing the production costs and the sale price.

Last but not least, a further drawback consists in the difficulty in setting reactors of the known type, due to the presence of a large number of pipes, valves and injectors to be set.

The aim of this invention is to overcome the above-mentioned drawbacks.

In particular the first aim of the present invention is to produce a reactor which has the same dimensions as the reactors of known type equivalent to it, and in particular the reactors of the patents mentioned, but fewer components.

A further aim is that the reactor of the invention does not have to be pre-assembled at the workshop and then disassembled prior to shipment to the purchaser.

A further aim is to produce a reactor which is simpler and quicker and therefore cheaper to construct than the known reactors with equivalent characteristics.

A further aim is to make assembly of the reactor of the invention at the user's premises simpler and quicker and therefore cheaper compared to the known reactors with equivalent characteristics.

A further aim of the invention is to produce a reactor which, with respect to known reactors with equivalent characteristics, has smaller overall dimensions. A further aim of the invention is to allow the reactor to be produced using any container that may also have already been used in another plant and discarded.

Last but not least, a further aim is to make the reactor of the invention less difficult to stow in the transport container than the reactors of known type with equivalent characteristics.

Said aims are achieved by producing a reactor for cleaning fibrous suspensions dispersed in liquids which according to the main claim comprises:
- a substantially cylindrical container with substantially vertical longitudinal axis to contain said suspension to be cleaned;
- one or more blades arranged inside said container and connected to a drive shaft which defines a substantially vertical rotation axis;
- drive elements combined with said drive shaft and designed to rotate it around said vertical axis;
- a plurality of feed units for introducing into said container said suspension to be cleaned, together with a gaseous substance dispersed in it in the form of bubbles, said feed units being arranged in succession one above the other at different heights inside said container;
- means for intercepting said suspension positioned inside said container and communicating with one or more of said feed units;
- devices for skimming off the foam formed by the impurities picked up by said bubbles;
and is characterised in that each of said feed units comprises at least one feed pipe which extends towards the inside of said container and is provided with a plurality of ejectors, each of said ejectors having a spray direction facing towards the inner surface of said container to distribute said suspension to be cleaned starting from the inside of the cross section of said container.

Each of the above feed units comprises a substantially rectilinear feed pipe which defines a substantially horizontal longitudinal axis and is arranged substantially radially to the cross section of the container.

According to one executive embodiment the feed pipe is provided at the end inside the container with a C-shaped tubular connection on which the ejectors are arranged.

Advantageously the reactor of the invention, since it comprises fewer components than the reactors of known type, is simpler to construct, costs less and is more reliable in terms of operation.

Again advantageously, for the same reasons described above, the reactor of the invention also requires less maintenance.

Equally advantageously, the reactor of the invention is simpler to transport and assemble than the known reactors equivalent to it.

Lastly, advantageously, the reactor of the invention permits the use of containers discarded from old plants.

The aims and advantages mentioned above will be illustrated in greater detail during the description of some preferred executive embodiments of the invention, which are provided as non-restrictive examples and are shown in the attached drawings, wherein:
- Figure 1 shows the longitudinal section of the reactor of the invention, indicating the flow directions during operation;
- Figure 2 shows the longitudinal section of an executive embodiment of the reactor of the invention, indicating the flow directions during operation;
- Figure 3 shows a cross section of the reactor of the invention with the injectors produced according to a preferred executive embodiment;
- Figure 4 shows the cross section of the reactor of the invention with the injectors produced according to an executive embodiment;
- Figure 5 shows an intermediate cross section of the reactor of the invention illustrated in Figure 1;
- Figure 6 shows a detail of the reactor of the invention illustrated in Figure 1 or in Figure 2;
- Figure 7 shows another cross section of the reactor of the invention illustrated in Figure 1 or in Figure 2;
- Figure 8 shows a partial axonometric view of the reactor of the invention illustrated in Figure 1;
- Figure 9 shows the reactor of the invention disassembled, with the parts already loaded in a container.

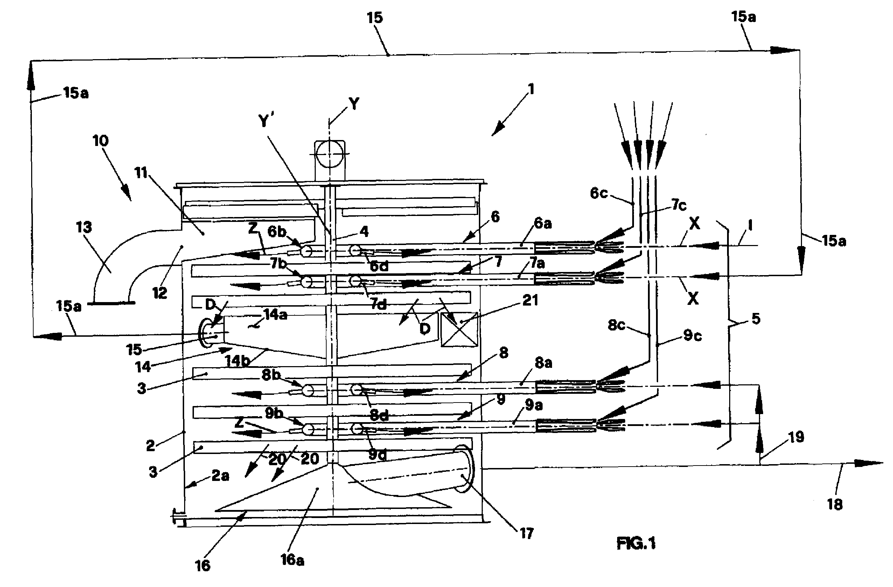

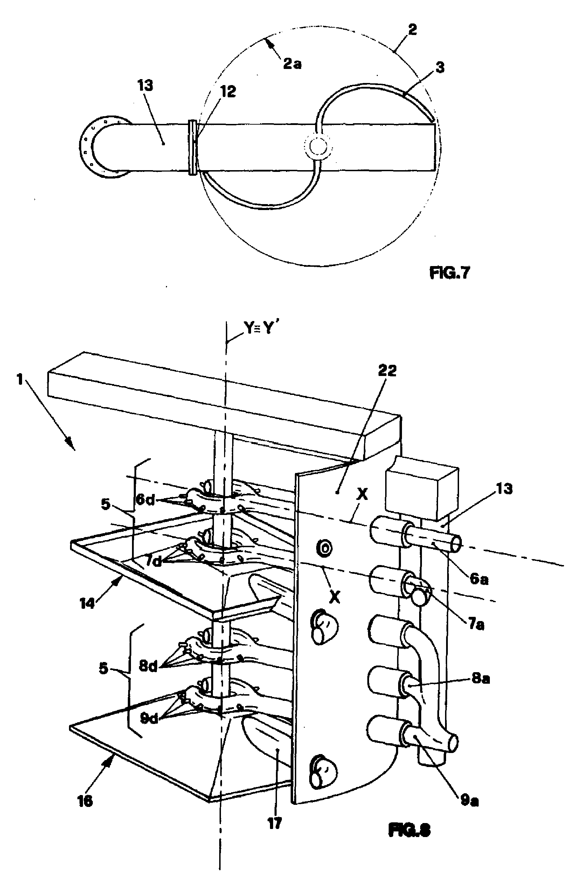

As can be seen in Figure 1, the reactor of the invention, indicated as a whole by **1,** consists of a substantially cylindrical container **2,** defining a substantially vertical longitudinal axis **Y,** provided with one or more blades **3** arranged inside it, one of which can be seen in the cross section of Figure 7.

The blades are connected to a drive shaft **4** which defines a substantially vertical rotation axis **Y'** coinciding with the longitudinal axis **Y** of the container **2.**

In different executive embodiments not represented, the axis of the container and the rotation axis may not coincide.

Drive elements set the drive shaft **4** rotating around the above-mentioned vertical axis in order to keep in motion the suspension to be cleaned contained inside the container **2.**

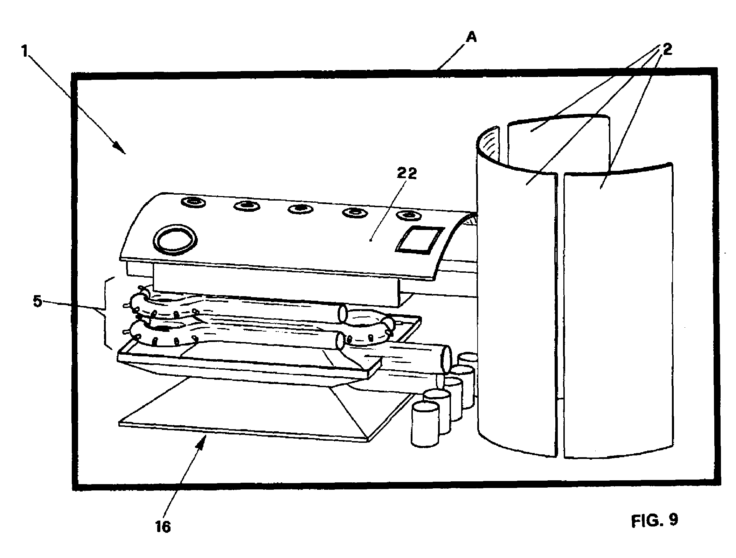

A plurality of feed units, indicated as a whole by **5,** which can be seen also in Figure 8, are arranged inside the container **2,** in succession one above the other and at different heights, in order to feed the suspension to be cleaned into the container, together with a gaseous substance dispersed in it in the form of bubbles.

More precisely, the feed units **5** comprise a main feed unit indicated as a whole by **6** and positioned at the level of the free surface of the fibrous solution to be cleaned, as well as a plurality of secondary feed units **7, 8, 9** arranged below the main feed unit **6.**

According to the invention, each of the above feed units **6, 7, 8, 9,** comprises a feed pipe **6a, 7a, 8a, 9a** which extends towards the inside of the container **2** and is provided with a plurality of ejectors **6d, 7d, 8d, 9d,** each of which has a spray direction **Z** facing towards the inner surface **2a** of the container **2** for the distribution of the suspension to be cleaned starting from the inside of the cross section **S** of the container **2.**

According to the executive embodiment shown in Figures 1, 3 and 8, each feed pipe **6a, 7a, 8a, 9a** is substantially rectilinear, defines a longitudinal axis **X** arranged substantially radially to the cross section **S** of the container **2** and is provided, at the end extending towards the inside of the container **2,** with a C-shaped tubular connection **6b, 7b, 8b, 9b.**

Said C-shaped tubular connection has its centre coinciding with the longitudinal axis **Y** of the container **2** and the ejectors **6d, 7d, 8d, 9d** are applied to it.

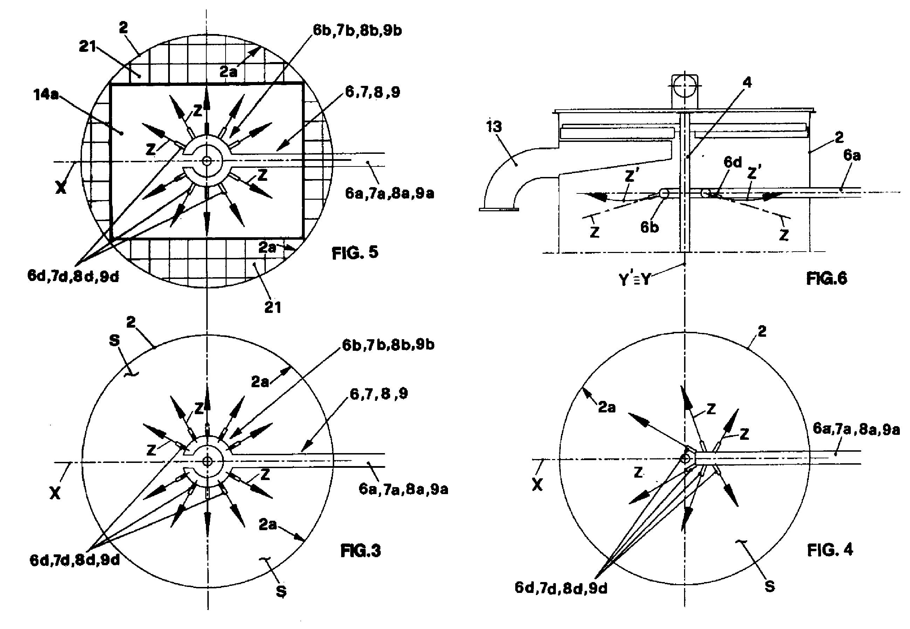

According to a variant shown in Figure 4, each feed pipe **6a, 7a, 8a, 9a** is substantially rectilinear and also defines a longitudinal axis **X** arranged substantially radially with respect to the cross section **S** of the container **2,** but differs from the above executive embodiment due to the fact that the ejectors **6d, 7d, 8d, 9d** are arranged on the outer surface of the feed pipe.

In both executive embodiments referred to, the ejectors can consist indifferently of precision-sized through holes made directly in the respective tubular elements, or fixed or removable jets applied to the tubular elements by means of screw or pressure coupling.

Furthermore each ejector has a spray direction **Z** facing towards the inner surface **2a** of the container **2.**

Said spray direction **Z** can be parallel to the plane defined by the cross section **S** of the container **2** or preferably, as shown in detail in Figure 5, intersect the cross section at an angle.

In particular the spray direction **Z** slightly slopes downwards in order to compensate for the fact that the air incorporated in the jet tends to move the jet upwards, displacing it along a curved path **Z'** which bends towards the top.

In this way**,** in the cross section **S** of the container **2,** the layer formed by the jets is of limited thickness with reference to the longitudinal axis **Y** of the container in which the suspension is uniformly distributed.

The main aim of the invention, that of feeding the suspension into the container with a reduced number of feed pipes and ejectors, has therefore been achieved.

It can be observed in particular that the main feed unit **6** comprises the feed pipe **6a** to which a suction pipe **6c** is connected in parallel, said pipe sucking air from the outside by Venturi effect when the suspension to be cleaned runs through the feed pipe **6a** in the direction indicated by the arrow **I** to reach the ejectors **6d**.

In this way an emulsion consisting of the suspension to be cleaned mixed with air is fed into the container **2,** wherein the air bubbles, assisted by the chemical reagents present, pick up the impurities dispersed in the suspension.

In this way a first flotation is obtained, which generates foam floating on the free surface of the suspension, said foam being removed from said surface by means of skimming devices indicated as a whole by **10.**

These comprise a rotating arm **11** connected to the drive shaft **4** which during rotation conveys the foam towards the outlet **12** of a drain pipe **13.**

The outlet **12** is obtained in the side surface **2a** of the container **2**, at the level of the circle described by the rotating arm **11** during rotation.

The liquid which drops vertically inside the container in the direction indicated by the arrow **D** is collected midway through its descent by second interception means **14** which, as can be seen in Figure 1, consist of a collecting tank **14a** with a tapered base **14b** converging downwards towards the centre, arranged substantially halfway up the container **2.**

In particular, the collecting tank **14a** is positioned between the above-mentioned secondary feed units **7, 8, 9** and communicates with the first secondary feed unit **7**, which is positioned immediately above the collecting tank **14a** and immediately below the main feed unit **6.**

More precisely, a delivery pipe **15,** via pumping means not shown, takes the liquid from the collecting tank **14a** and conveys it in direction **15a** to the feed pipe **7a** of the above-mentioned first secondary feed unit **7.**

Also in this case a suction pipe **7c** is connected parallel to the feed pipe **7a** and communicates with the external environment, enabling the liquid that flows through the feed pipe **7a** to suck in air by Venturi effect.

The suspension crosses the feed pipe **7a** and reaches the injectors **7d** which feed it in immediately above the collection tank **14a**.

The suspension is sprayed by the injectors **7d** from the inside of the section of the container **2** towards its inner surface **2a**, according to the directions shown in the drawings in Figures 3 and 4.

In particular, if the injectors are of the type shown in Figure 3, the injection directions **Z** are substantially radial, whereas if the injectors are of the type shown in Figure 4, then the directions **Z** are not radial, but in any case facing the inner surface of the container **2.**

The suspension that has already been cleaned previously, having undergone the first flotation, drops by gravity in the direction shown by the arrows **D** and undergoes a second flotation during which the air bubbles which combine with the impurities still present in the suspension are transformed into foam which rises by gravity to the free surface and is eliminated as already explained.

The suspension that is fed back into the container **2** above the collecting tank **14a** drops towards the bottom of the container **2,** where first interception means are present, indicated as a whole by **16** and comprising a collecting hood **16a** tapering upwards provided with at least one delivery pipe **17** connected to it, said pipe allowing the cleaned liquid to be extracted by means of pumping means with which it is provided and which are not shown.

A part of the cleaned liquid indicated by the arrow **18** is conveyed away for use and constitutes the so-called "accepted" liquid, while the remaining part indicated by the arrow **19** flows into the feed pipes **8a** and **9a** of the second **8** and third **9** secondary feed unit respectively, which are arranged above the first interception means **16.**

From the second **8** and third **9** secondary feed unit the suspension is fed in at an intermediate position in the container **2** via further ejectors **8d** and **9d** respectively, after emulsification with air that, also in this case, is taken in by Venturi effect through respective suction pipes **8c, 9c** arranged parallely to the secondary feed pipes.

The liquid that flows towards the bottom of the container in the direction indicated by the arrows **20** undergoes further flotation and is completely cleaned when it enters the first interception means **16** for the second time.

The fibrous suspension passes through the inside of the container **2** several times thus undergoing several flotation operations, assisted also by the rotation of the blades **3**.

In this regard each blade **3** consists of a flat laminar body or, alternatively, of a rectilinear or curved tubular body as shown in Figure 7.

To stabilise the ascending and descending flows, grille sectors **21** are provided inside the container **2,** which are arranged between the intermediate tank **14a** and the inner surface of the container **2** as can be seen in Figure 5.

The insertion of said grille sectors **21** is possible since, to reduce the dimensions of the intermediate tank **14a** and facilitate loading and transport of the reactor via container **A,** the intermediate tank **14a** and also the hood **16a** which constitutes the first collecting means **16** are quadrangular in shape as can be seen in Figure 5.

The intermediate tank **14a** will be preferably square-shaped.

Furthermore, as can be seen in the axonometric representation of Figure 8, all the feed pipes **6a, 7a, 8a, 9a** are vertically aligned on one single shaped metal sheet **22,** which is assembled by welding to further shaped metal sheets complementary to it to constitute the cylindrical container **2.**

The disassembled reactor is loaded in a container **A** by arranging the elements as shown in Figure 9.

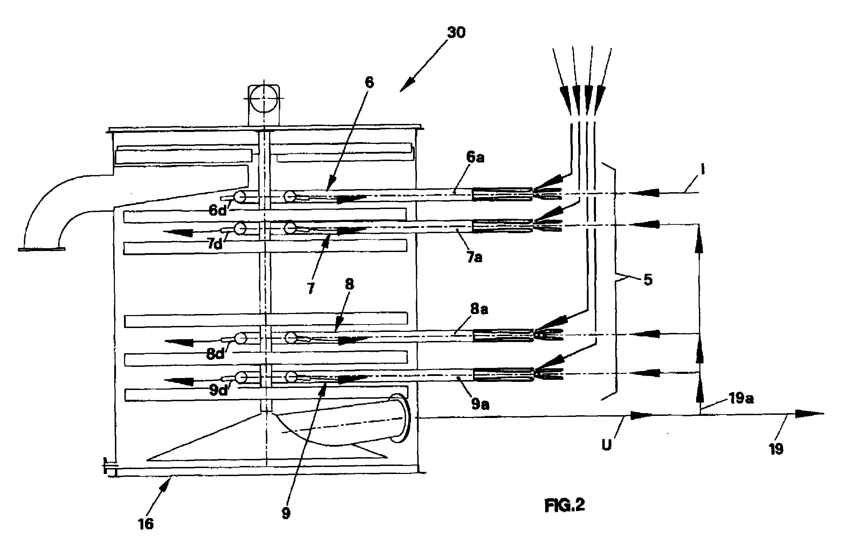

In a simplified executive embodiment shown in Figure 2, the reactor of the invention, indicated as a whole by **30,** differs from the executive embodiment just described due to lack of the intermediate tank.

In said case, with reference to the fibrous suspension indicated by the arrow **U** which comes out of the first interception means 16 arranged on the bottom, the part indicated by the arrow **19** is conveyed away for use and the remaining part indicated by the arrow **19a** is conveyed through all the feed pipes **7a, 8a, 9a** of the secondary feed units **7, 8, 9** which in this case, as can be seen, are all arranged below the main feed unit **6** and above the first interception means **16.** On the basis of what has been described, the reactor of the invention achieves all the set aims.

In particular, the presence of the feed units each consisting of one single feed pipe with injectors that inject the suspension from the inside of the container permits the production of a reactor with fewer components compared to the known technique.

Said construction simplicity also permits achievement of the aim to avoid pre-assembly of the reactor at the factory prior to shipment to the customer.

Furthermore the aim to produce a reactor with simpler, quicker and therefore cheaper construction compared to the known reactors with equivalent characteristics is also achieved.

The aim to produce a reactor with smaller overall dimensions than the known reactors with equivalent characteristics is also achieved.

Lastly, advantageously for the users, the reactor of the invention requires less maintenance and can also be produced using any discarded container that has already been used in another plant.

It should be pointed out that in the reactor of the invention the number of feed units, their arrangement, the number of blades, their arrangement and their shape can be different from what has been described and illustrated herein.

Modifications can also be made to the reactor of the invention and it can be produced according to construction variants which, if they fall within the scope of the following claims, must all be considered protected by this patent.

## Claims

1. Reactor (1; 30) for cleaning fibrous suspensions dispersed in liquids, comprising:
- a substantially cylindrical container (2) defining a substantially vertical longitudinal axis (Y) for containing said suspension to be cleaned;
- one or more blades (3) arranged inside said container (2) and connected to a drive shaft (4) defining a substantially vertical rotation axis (Y');
- drive elements associated with said drive shaft (4) and designed to rotate it around said rotation axis (Y');
- a plurality of feed units (5, 6, 7, 8, 9) to feed said suspension to be cleaned into said container together with a gaseous substance dispersed in it in the form of bubbles, said feed units being arranged in succession one above the other at different heights inside said container (2);
- interception means (14; 16) for said suspension arranged inside said container (2) and communicating with one or more of said feed units (7, 8, 9);
- devices for skimming (10) the foam formed by the impurities picked up by said bubbles;
**characterised in that** each of said feed units (6, 7, 8, 9) comprises at least one feed pipe (6a, 7a, 8a, 9a) which extends towards the inside of said container (2) and is provided with a plurality of ejectors (6d, 7d, 8d, 9d), each of said ejectors (6d, 7d, 8d, 9d) having a spray direction (Z) facing towards the inner surface (2a) of said container (2) to distribute said suspension to be cleaned starting from the inside of the cross section (S) of said container (2).

2. Reactor (1; 30) according to claim 1), **characterised in that** one or more of said feed units (6, 7, 8, 9) comprises a substantially straight feed pipe (6a, 7a, 8a, 9a) which is provided with said ejectors (6d, 7d, 8d, 9d) arranged on its outer surface and defines a longitudinal axis (X) arranged substantially radially to the cross section (S) of said container (2).

3. Reactor (1; 30) according to claim 1), **characterised in that** one of said feed units (6, 7, 8, 9) comprises a substantially straight feed pipe (6a, 7a, 8a, 9a) defining a longitudinal axis (X) positioned substantially radially to the cross section (S) of said container (2) and provided at the end facing the inside of said container (2) with a C-shaped tubular connection (6b, 7b, 8b, 9b) on which said ejectors (6d, 7d, 8d, 9d) are arranged.

4. Reactor (1; 30) according to claim 3), **characterised in that** said C-shaped tubular connection (6b, 7b, 8b, 9b) has its centre positioned on the substantially vertical longitudinal axis (Y) of said container (2).

5. Reactor (1; 30) according to claim 1), **characterised in that** said longitudinal axis (Y) of said container (2) and said rotation axis (Y') of said drive shaft (4) coincide.

6. Reactor (1; 30) according to claim 3), **characterised in that** each of said ejectors (6d, 7d, 8d, 9d) consists of a hole present in said C-shaped tubular element (6b, 7b, 8b, 9b).

7. Reactor (1; 30) according to claim 2), **characterised in that** each of said ejectors (6d, 7d, 8d, 9d) consists of a hole present in said feed pipe (6a, 7a, 8a, 9a).

8. Reactor (1; 30) according to claim 6) or 7), **characterised in that** each of said ejectors (6d, 7d, 8d, 9d) is an ejector element removably applied to said C-shaped tubular element (6b, 7b, 8b, 9b) and is provided with a through hole communicating with the inside of said tubular element.

9. Reactor (1; 30) according to claim 7), **characterised in that** each of said ejectors (6d, 7d, 8d, 9d) is an ejector element removably applied to said feed pipe (6a, 7a, 8a, 9a) and is provided with a through hole communicating with the inside of said feed pipe.

10. Reactor (1; 30) according to claim 1), **characterised in that** said spray direction (Z) is parallel to the plane defined by said cross section (S) of said container (2).

11. Reactor (1; 30) according to claim 1), **characterised in that** said spray direction (Z) intersects said cross section (S) of said container (2) at an angle.

12. Reactor (1; 30) according to claim 11), **characterised in that** said spray direction (Z) faces downwards.

13. Reactor (1) according to claim 1) or 10) or 11), **characterised in that** said spray direction (Z) is radial with respect to said cross section (S) of said container (2).

14. Reactor (1; 30) according to claim 1), **characterised in that** said feed units (5) comprise:
- a main feed unit (6) arranged at the level of the free surface of said fibrous solution to be cleaned;
- a plurality of secondary feed units (7, 8, 9) arranged below said main feed unit (6),
one or more of said secondary feed units (7, 8, 9) being hydraulically connected with the first interception means (16) arranged on the bottom of said container to transfer said fibrous solution to an intermediate position in said container (2) below said main feed unit (6).

15. Reactor (1) according to claim 14), **characterised in that** it also comprises second interception means (14) arranged substantially halfway up said container (2), said second interception means (14) being hydraulically connected to at least one of said secondary feed units (7) arranged above said second interception means (14) and below said main feed unit (6).

16. Reactor (1; 30) according to claim 14), **characterised in that** said first interception means (16) comprise a collecting hood (16a) tapering upwards provided with at least one delivery pipe (17) hydraulically connected to said one or more secondary feed units (8, 9) and combined with pumping means.

17. Reactor (1; 30) according to claim 15), **characterised in that** said second interception means (14) comprise a collecting tank (14a) positioned substantially halfway up said container (2) between said secondary feed units (7, 8).

18. Reactor (1; 30) according to claim 17), **characterised in that** said collecting tank (14a) is provided with pumping means and at least one delivery pipe (15) hydraulically connected to at least one of said one or more secondary feed units (7) which is arranged above said collecting tank (14a) and below said main feed unit (6).

19. Reactor (1; 30) according to claim 18), **characterised in that** said collecting tank (14a) has a tapered base (14b) converging downwards towards the centre.

20. Reactor (1; 30) according to claim 1), **characterised in that** said skimming devices (10) for said foam comprise at least one rotating arm (11) connected to said drive shaft (4) and a drain pipe (13) with outlet (12) provided in the inner surface (2a) of said container (2) near the free surface of said suspension to be cleaned and in correspondence with the circle which said rotating arm (11) describes on the inner surface (2a) of said container (2) during rotation.

21. Reactor (1; 30) according to claim 1), **characterised in that** each of said feed units (6, 7, 8, 9) has its feed pipe (6a, 7a, 8a, 9a) connected in parallel to an air suction pipe (6c, 7c, 8c, 9c) communicating with the outside by means of a Venturi pipe.

22. Reactor (1) according to claim 1), **characterised in that** each of said blades (3) has a flat S-shaped profile.

23. Reactor (1) according to claim 1), **characterised in that** each of said blades is rectilinear.

24. Reactor (1) as shown and described.

25. Method for cleaning fibrous suspensions dispersed in liquids by means of pick-up of the impurities by a gaseous substance dispersed in said fibrous suspension in the form of bubbles using a reactor of the type comprising:
- a substantially cylindrical container to contain said suspension to be cleaned;
- one or more rotating blades arranged inside said container;
- a plurality of feed units with ejectors designed to spray said suspension to be cleaned into said container, with a gaseous substance dispersed in it in the form of bubbles;
- means for discharging the cleaned suspension and the foam formed by the impurities present in said suspension picked up by said bubbles,
**characterised in that** said spraying of said suspension to be cleaned into said container is performed from the inside of said container with direction facing the inner surface of said container.
